# EUROPEAN PATENT APPLICATION

(11) **EP 4 397 604 A1**
(43) Date of publication of application: **10.07.2024**
(21) Application number: 23211724.2
(22) Date of filing: 23.11.2023
(51) Int. Cl.: B65G 25/02, B65G 25/06

(54) **RECIPROCATING CONVEYOR**

(30) Priority: 06.01.2023 CN 202320028721 U
(71) Applicant: Jabil Circuit (Singapore) Pte. Ltd., Singapore 528604 (SG)
(72) Inventor: Singh, Harpuneet, Dublin CA, 94568 (US); Hu, Lei, 528511 Singapore (SG); Chu, Chien-Cheng, 420073 Taichung City (TW); Phua, Tike Hoong, 550232 Singapore (SG); Zheng, Xiao Ting, Shanwei City, Guangdong Province, 516600 (CN)
(74) Representative: Gulde & Partner

(57) **Abstract**

A reciprocating conveyor (100) includes a first carrier (21) that is slidably mounted on a first sliding rail mechanism (15), a sliding seat (31) that is slidably mounted on a second sliding rail mechanism (16) and that is situated below the first carrier (21), and a second carrier (32) that is movable upwardly and downwardly connected to sliding seat (31), and that has a slide protrusion (324) slidably engaging with a guiding rail (17). When the first and second carriers (21, 32) are respectively at a first location and a second location, the second carrier (32) is movable through a dodging location that is lower than the first and second locations, via sliding engagement between the slide protrusion (324) and the guiding rail (17), to the first location, thereby driving the first carrier (21) to simultaneously move, via a linkage unit (4), to the second location.

## Description

The disclosure relates to a conveyor, and more particularly to a reciprocating conveyor.

A conventional conveyor has only one carrier module that carries a carrier container (e.g. a carrier tray) and that moves along a production line, thereby conveying the carrier container in an unloaded state from a location (A) to another location (B) and conveying the carrier container in a loaded state from another location (B) to the location (A). As a result, it may take twice as long to complete a round-way trip by using only one carrier module. Two conventional conveyors may be used to complete such a round-way trip to save time, but more production spaces are needed and equipment costs may be increased.

An aspect of the disclosure is to provide a reciprocating conveyor that can alleviate at least one of the drawbacks of the prior art.

According to an aspect of the disclosure, there is provided a reciprocating conveyor according to Claim 1.

Other features and advantages of the disclosure will become apparent in the following detailed description of the embodiment(s) with reference to the accompanying drawings. It is noted that various features may not be drawn to scale.
Figure 1 is a perspective view illustrating a reciprocating conveyor according to an embodiment of the disclosure.
Figure 2 is an exploded perspective view illustrating the reciprocating conveyor of the embodiment
Figure 3 is a schematic side view of the embodiment, illustrating a first carrier of a first carrying unit in a first location and a second carrier of a second carrying unit in a second location while outer plates and inner plates of the reciprocating conveyor are omitted.
Figure 4 is a view similar to Figure 3, but illustrating the first carrier moved between the first location and the second location while the second carrier is moved through a dodging location between the first location and the second location.
Figure 5 is a view similar to Figure 3, but illustrating the first carrier moved to the second location and the second carrier moved to the first location.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

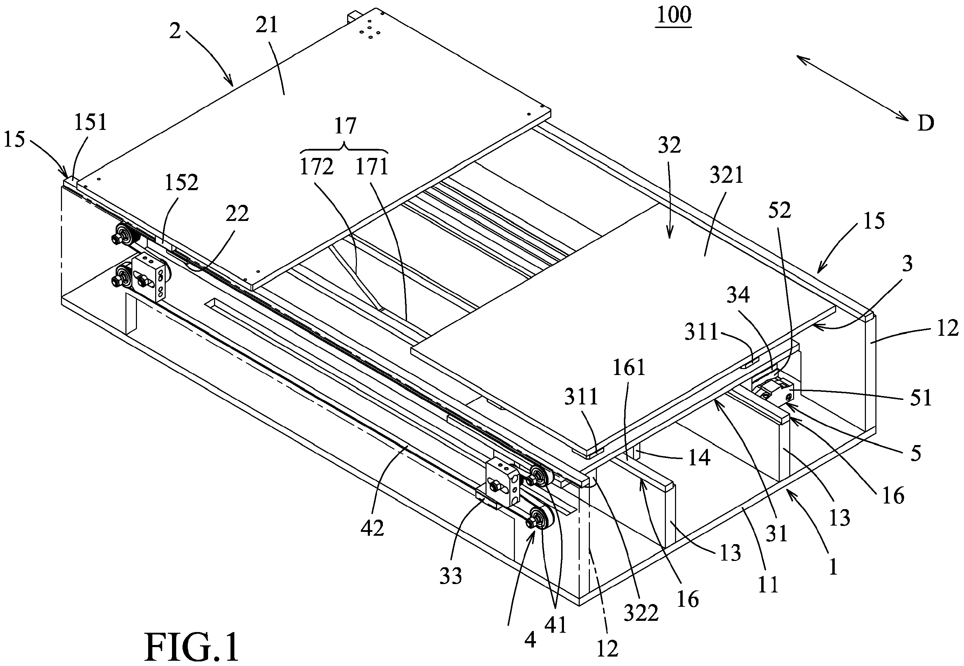

Figures 1 to 3 illustrate a reciprocating conveyor 100 according to an embodiment of the disclosure for conveying an object. The object, for example, is a carrier 200 that may be loaded with a component (not shown) to be processed. The reciprocating conveyor 100 includes a base unit 1, a first carrying unit 2, a second carrying unit 3, a linkage unit 4, and a power unit 5.

The base unit 1 includes a base plate 11, two outer plates 12, two inner plates 13, a guiding plate 14, two first sliding rail mechanisms 15, two second sliding rail mechanisms 16, and a guiding rail 17. The outer plates 12 project upwardly from the base plate 11, are spaced apart from each other, and are elongated in a shuttling direction (D). The inner plates 13 project upwardly from the base plate 11, are spaced apart from each other, are elongated in the shuttling direction (D), and are disposed between the outer plates 12. The guiding plate 14 projects upwardly from the base plate 11, is elongated in the shuttling direction (D), and is disposed between the inner plates 13. The first sliding rail mechanisms 15 extend in the shuttling direction (D) and are respectively disposed atop the outer plates 12. The second sliding rail mechanisms 16 extend in the shuttling direction (D) and are respectively disposed atop the inner plates 13. The guiding rail 17 is disposed on the guiding plate 14. Each of the second sliding rail mechanisms 16 is disposed below each of the first sliding rail mechanisms 15. The guiding rail 17 is disposed below the second sliding rail mechanisms 16. The guiding rail 17 is a channel extending through the guiding plate 14 in a direction perpendicular to the shuttling direction (D). In this embodiment, the guiding rail 17 has an intermediate portion 171 and two inclined portions 172. The intermediate portion 171 of the guiding rail 17 is elongated in the shuttling direction (D). The inclined portions 172 are connected to the intermediate portion 171 and are inclined upwardly and away from each other with respect to the shuttling direction (D).

Each of the first sliding rail mechanisms 15 includes a first rail 151 and a first sliding block 152. The first rail 151 is disposed atop a respective one of the outer plates 12 and is elongated in the shuttling direction (D). The first sliding block 152 is disposed on the first rail 151 and is slidable in the shuttling direction (D) relative to the first rail 151.

Each of the second sliding rail mechanisms 16 includes a second rail 161 and a second sliding block 162. The second rail 161 is disposed atop a respective one of the inner plates 13 and is elongated in the shuttling direction (D). The second sliding block 162 is disposed on the second rail 161 and is slidable in the shuttling direction (D) relative to the second rail 161.

The first carrying unit 2 is mounted to the first sliding blocks 152 of the first sliding rail mechanisms 15 so as to slide together with the first sliding blocks 152. The first carrying unit 2 includes a first carrier 21 that is mounted to the first sliding blocks 152 to slide together with the first sliding blocks 152 and that is loaded with the carrier 200.

The second carrying unit 3 is mounted to the second sliding blocks 162 of the second sliding rail mechanisms 16 so as to slide together with the second sliding blocks 162. The second carrying unit 3 includes a sliding seat 31 and a second carrier 32.

The sliding seat 31 is mounted to the second sliding blocks 162 so as to slide together with the second sliding blocks 162. The sliding seat 31 is situated below the first carrier 21, is formed with a plurality of sliding sleeves 311, and has a dodging hole 312 surrounded by the sliding sleeves 311. Each of the sliding sleeves 311 has a sliding hole 311A.

The second carrier 32 is connected to the sliding seat 31, is movable upwardly and downwardly relative to the sliding seat 31, and has a slide protrusion 324 slidably engaging with the guiding rail 17. In this embodiment, the second carrier 32 further has a carrier body 321, a plurality of sliding posts 322, and an extension post 323. The carrier body 321 is disposed over the sliding seat 31. The sliding posts 322 extend downwardly from the carrier body 321 and extend respectively through and are upwardly and downwardly movable relative to the sliding holes 311A. The extension post 323 extends downwardly from the carrier body 321 and extends movably through the dodging hole 312. The slide protrusion 324 is disposed on the extension pole 323 and is disposed under the sliding seat 31.

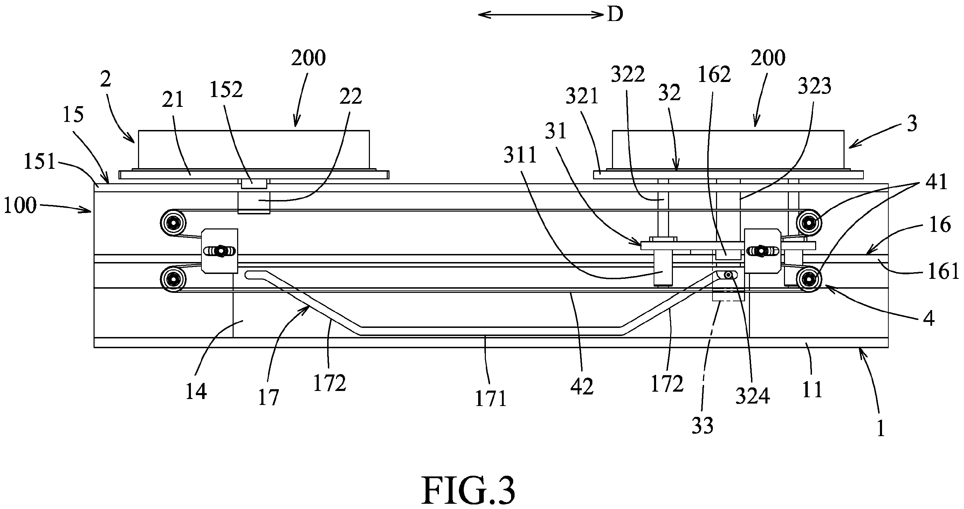

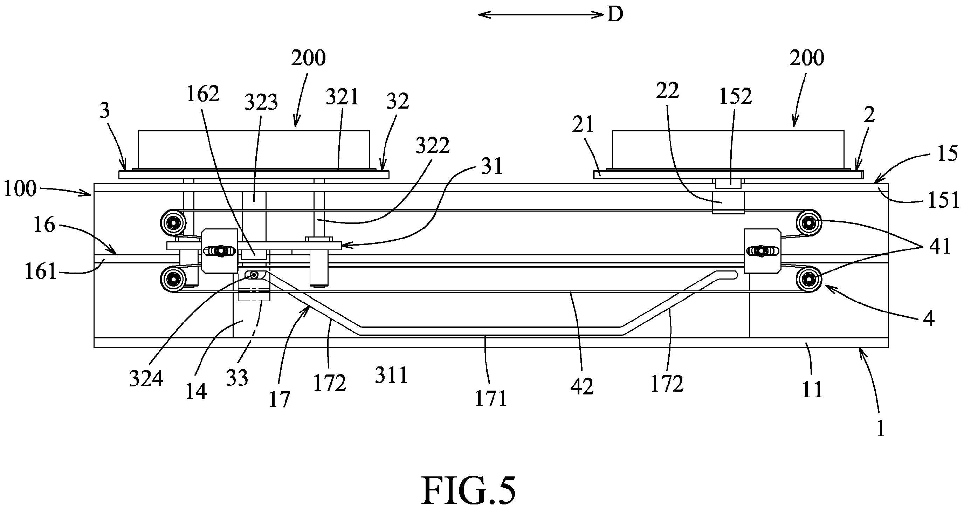

Referring to Figures 3 to 5, the linkage unit 4 is connected to the first carrying unit 2 and the second carrying unit 3 such that, when the first and second carriers 21, 32 are respectively at a first location (as shown on a left side of Figure 3) and a second location (as shown on a right side of Figure 3), the second carrier 32 is movable through a dodging location that is lower than the first and second locations and that is lower than the first carrier 21, via sliding engagement between the slide protrusion 324 and the guiding rail 17, to the first location, thereby driving the first carrier 21 to simultaneously move, via the linkage unit 4, to the second location. As shown in Figure 3, the first location and the second location are opposite in the shuttling direction (D). In this embodiment, the linkage unit 4 includes a plurality of pulleys 41 and a linkage belt 42. The pulleys 41 are disposed on an inner surface of one of the outer plates 12. The linkage belt 42 is looped around the pulleys 41. The first carrying unit 2 further includes a first engagement structure 22 that connects the first carrier 21 to the linkage belt 42. The second carrying unit 3 further includes a second engagement structure 33 that connects the sliding seat 31 to the linkage belt 42.

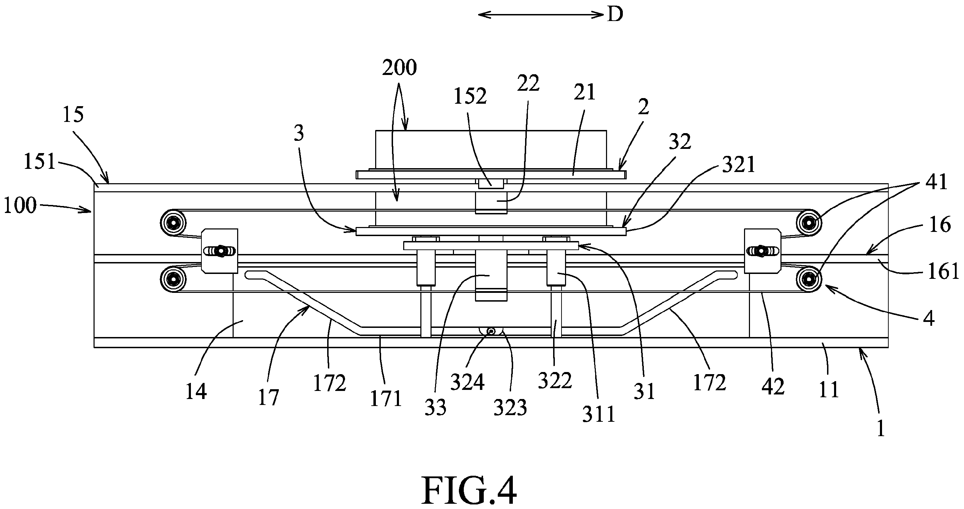

Because the second carrier 32 is movable upwardly and downwardly relative to the sliding seat 31 by the slide protrusion 324 slidably engaging with the guiding rail 17, during movement of the second carrier 32 between the first location and the second location, the second carrier 32 is moved first downwardly by the slide protrusion 324 sliding downwardly in one of the inclined portions 172 of the guiding rail 17. When the slide protrusion 324 slides in the intermediate portion 171 toward the other one of inclined portions 172, the second carrier 32 is moved through the dodging location and below the first carrier 21 (as shown in Figure 4) so as to dodge the first carrier 21, thereby avoiding interfering with movement of the first carrier 21. When the slide protrusion 324 slides upwardly in the other one of inclined portions 172, the second carrier 32 is moved upwardly.

The power unit 5 is, for example, a mechanical rodless cylinder for driving the second carrier 32 to move in a reciprocating manner between the first location and the second location through the dodging location, thereby driving simultaneous movement of the first carrier 21 through the linkage unit 4 in the reciprocating manner between the first location and the second location.

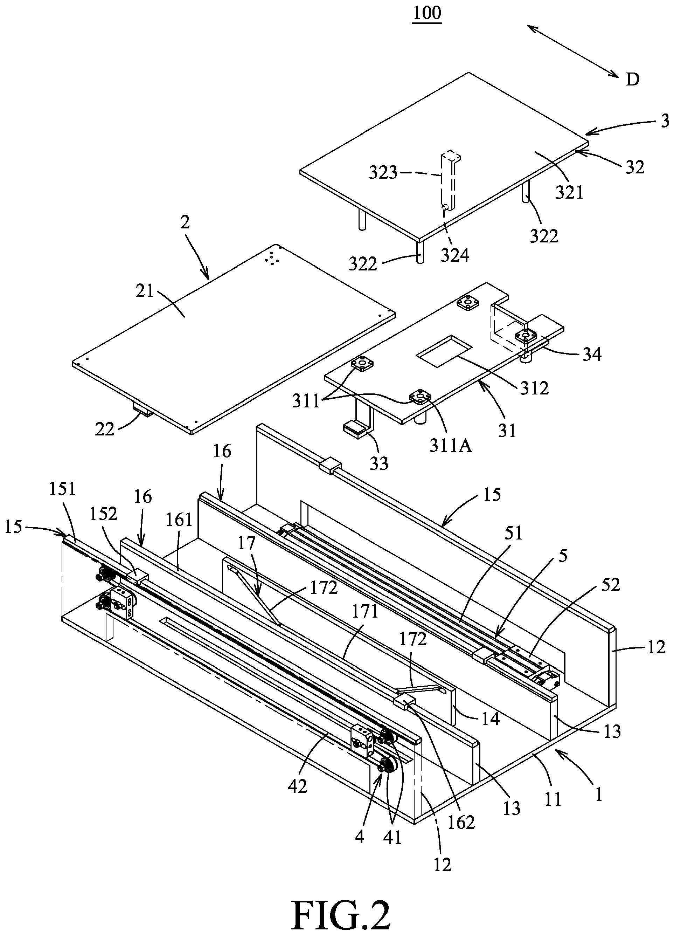

Referring back to Figures 1 and 2, the power unit 5 includes a fixing portion 51 and a moving portion 52. The fixing portion 51 is fixed to the base plate 11 and extends in the shuttling direction (D). The moving portion 52 is connected to and movable along the fixing portion 51 in the shuttling direction (D). In this embodiment, the second carrying unit 3 further includes a third engagement structure 34 that connects the sliding seat 31 to the moving portion 52. When the moving portion 52 reciprocates in the shuttling direction (D) relative to the fixing portion 51, the third engagement structure 34 is driven by the moving portion 52 to move the sliding seat 31 and the second carrier 32 together therewith in the shuttling direction (D). During the movement of the second carrier 32 in the shuttling direction (D), by virtue of the slide protrusion 324 slidably engaging with the guiding rail 17, the second carrier 32 not only moves together with the sliding seat 31 in the shuttling direction (D), but also moves upwardly and downwardly relative to the sliding seat 31 and the first carrier 21. Meanwhile, because the second engagement structure 33 connects the sliding seat 31 to the linkage belt 42, movement of the sliding seat 31 may drive operation of the linkage belt 42 through the second engagement structure 33. By virtue of the first engagement structure 22 connecting the first carrier 21 to the linkage belt 42, the operation of the linkage belt 42 may drive the first carrier 21 to move, so the first carrier 21 and the second carrier 32 may move in the reciprocating manner relative to each other.

Because the first carrier 21 and the second carrier 32 may move in the reciprocating manner relative to each other between the first location and second location with respect to the base unit 1, the reciprocating conveyor 100 may continuously and simultaneously convey the carriers 200 each loaded with or without the component to be processed between the first location and the second location through the first carrier 21 and the second carrier 32. As a result, the time for conveying the carrier 200 between the first location and second location may be shortened, and spaces needed and equipment costs of the reciprocating conveyor 100 maybe reduced.

In summary, because the second carrier 32 is movable upwardly and downwardly relative to the sliding seat 31 and is guided by the guiding rail 17 to move through the dodging location to dodge the first carrier 21 between the first location and second location, and because the linkage unit 4 is connected to the first carrying unit 2 and the second carrying unit 3, the first carrier 21 and the second carrier 32 may simultaneously move in the reciprocating manner between the first location and second location without interfering with each other, thereby saving time for conveying the carrier 200.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A reciprocating conveyor (100) including:
a base unit (1) including at least one first sliding rail mechanism (15) and at least one second sliding rail mechanism (16) that extend in a shuttling direction (D); and
a first carrying unit (2) including a first carrier (21) that is slidably mounted on said at least one first sliding rail mechanism (15);
**characterized in that**:
said base unit (1) further includes a guiding rail (17) that has an intermediate portion (171) and two inclined portions (172) connected to said intermediate portion (171) and being inclined upwardly and away from each other with respect to the shuttling direction (D);
said reciprocating conveyor (100) further includes
a second carrying unit (3) including
a sliding seat (31) that is slidably mounted on said at least one second sliding rail mechanism (16) and that is situated below said first carrier (21), and
a second carrier (32) that is connected to said sliding seat (31), that is movable upwardly and downwardly relative to said sliding seat (31), and that has a slide protrusion (324) slidably engaging with said guiding rail (17); and
a linkage unit (4) connected to said first carrying unit (2) and said second carrying unit (3) such that, when said first and second carriers (21, 32) are respectively at a first location and a second location, said second carrier (32) is movable through a dodging location that is lower than the first location and the second location, via sliding engagement between said slide protrusion (324) and said guiding rail (17), to the first location, thereby driving said first carrier (21) to simultaneously move, via said linkage unit (4), to the second location.

2. The reciprocating conveyor (100) as claimed in Claim 1, wherein:
said at least one second sliding rail mechanism (16) is disposed below said at least one first sliding rail mechanism (15); and
said guiding rail (17) is disposed below said at least one second sliding rail mechanism (16).

3. The reciprocating conveyor (100) as claimed in Claim 2, wherein:
said sliding seat (31) has a dodging hole (312);
said second carrier (32) further has a carrier body (321) that is disposed over said sliding seat (31), and an extension post (323) that extends downwardly from said carrier body (321) and that extends movably through said dodging hole (312); and
said slide protrusion (324) is disposed on said extension pole (323).

4. The reciprocating conveyor (100) as claimed in Claim 3, wherein said slide protrusion (324) is disposed under said sliding seat (31).

5. The reciprocating conveyor (100) as claimed in Claim 3, wherein:
said sliding seat (31) further has a sliding hole (311A);
said second carrier (32) further has a sliding post (322) that extends downwardly from said carrier body (321) and that extends through and is upwardly and downwardly movable relative to said sliding hole (311A).

6. The reciprocating conveyor (100) as claimed in any one of Claims 1 to 5, wherein said intermediate portion (171) of said guiding rail (17) is elongated in the shuttling direction (D).

7. The reciprocating conveyor (100) as claimed in any one of Claims 1 to 6, wherein:
said linkage unit (4) includes a plurality of pulleys (41) that are disposed on said base unit (1); and
said first carrying unit (2) further includes a first engagement structure (22) that connects said first carrier (21) to said linkage belt (42).

8. The reciprocating conveyor (100) as claimed in Claim 7, wherein:
said linkage unit (4) further includes a linkage belt (42) that is looped around said pulleys (41); and
said second carrying unit (3) further includes a second engagement structure (33) that connects said sliding seat (31) to said linkage belt (42).

9. The reciprocating conveyor (100) as claimed in any one of Claims 1 to 8, further comprising a power unit (5) for driving said second carrier (32) to move between the first location and the second location through the dodging location, thereby driving simultaneous movement of said first carrier (21).

10. The reciprocating conveyor (100) as claimed in Claim 9, wherein:
said power unit (5) includes a fixing portion (51) that extends in the shuttling direction (D), and a moving portion (52) that is connected to and movable along said fixing portion (51); and
said second carrying unit (3) further includes a third engagement structure (34) that connects said sliding seat (31) to said moving portion (52).

11. The reciprocating conveyor (100) as claimed in any one of Claims 1 to 10, wherein:
said base unit (1) includes
a base plate (11), and
two outer plates (12) that project upwardly from said base plate (11), that are spaced apart from each other, and that are elongated in the shuttling direction (D); and
said at least one first sliding rail mechanism (15) includes two first sliding rail mechanisms (15) that extend in the shuttling direction (D) and that are respectively disposed atop said outer plates (12).

12. The reciprocating conveyor (100) as claimed in Claim 11, wherein:
said base unit (1) further includes two inner plates (13) that project upwardly from said base plate (11), that are spaced apart from each other, that are elongated in the shuttling direction (D), and that are disposed between said outer plates (12); and
said at least one second sliding rail mechanism (16) includes two second sliding rail mechanisms (16) that extend in the shuttling direction (D) and that are respectively disposed atop said inner plates (13).

13. The reciprocating conveyor (100) as claimed in Claim 12, wherein:
said base unit (1) further includes a guiding plate (14) that projects upwardly from said base plate (11), that is elongated in the shuttling direction (D), and that is disposed between said inner plates (13); and
said guiding rail (17) is disposed on said guiding plate (14).
